# EUROPÄISCHE PATENTSCHRIFT

(11) **EP 1 118 516 B1**
(45) Veröffentlichungstag und Bekanntmachung des Hinweises auf die Patenterteilung: **04.07.2007**
(21) Anmeldenummer: 00127872.0
(22) Anmeldetag: 20.12.2000
(51) Int. Cl.: B60S 1/52, B60S 1/48

(54) **Verfahren zur Aktiv-Reinigung von Scheiben bei einem Kraftfahrzeug**
Method for active cleaning of vehicle windows
Méthode de nettoyage actif pour vitres de véhicule

(30) Priorität: 20.01.2000 DE 10002244
(43) Veröffentlichungstag der Anmeldung: 25.07.2001
(73) Patentinhaber: Bayerische Motoren Werke Aktiengesellschaft, 80809 München (DE)
(72) Erfinder: Lersch, Ferdinand, 80804 München (DE); Holler, Peter, 86899 Landsberg (DE); Haas, Christian, 80809 München (DE)

(56) Entgegenhaltungen:
- EP-A- 0 764 568
- DE-A- 2 216 752
- DE-A- 2 643 549
- GB-A- 2 326 083
- US-A- 4 393 341
- US-A- 4 922 570
- PATENT ABSTRACTS OF JAPAN vol. 018, no. 072 (M-1555), 7. Februar 1994 (1994-02-07) -& JP 05 286417 A (NISSAN MOTOR CO LTD), 2. November 1993 (1993-11-02)

## Beschreibung

Die Erfindung bezieht sich auf ein Verfahren zur Aktiv-Reinigung von Scheiben bei einem Kraftfahrzeug.

Ein Verfahren zur Aktiv-Reinigung von Scheiben in Kraftfahrzeugen ist beispielsweise aus der DE 196 05 927 A1 bekannt. Bei diesem bekannten Verfahren wird ein Scheibenwischarm verwendet, der ein Wischblatt und Mittel zum Aufbringen von Reinigiungsfluid auf die Scheibe umfaßt. Hierbei sind die Mittel zum Aufbringen des Reinigungsfluids in Form von Düsen derart angeordnet, daß bezogen auf die Längsrichtung des Wischblattes das Reinigungsfluid lediglich auf eine Seite des Wischblattes, nämlich in Ruhelage betrachtet auf der Unterseite, aufgebracht werden kann. Bei dem in der DE 196 05 927 A1 beschriebenen Verfahren wird das Reinigungsfluid insbesondere dann auf die Scheibe aufgebracht, wenn sich der Scheibenwischarm in die Gegenrichtung zu der Seite bewegt, auf der sich die Düsen befinden, nämlich wenn sich der Scheibenwischarm in der Aufwärtsbewegung befindet. Dieses Verfahren ermöglicht im Zusammenhang mit einer vorgegebenen Verweilzeit des Scheibenwischarmes nach der Aufwärtsbewegung, also nach der ersten Hälfte des Wischzyklusses, ein hevorragendes Reinigungsergebnis, kann jedoch vorzugsweise lediglich im Stillstand des Fahrzeuges verwendet werden, da die Sicht stark beeinträchtigt wird.

Aus der DE-A-4027326 ist ein Verfahren zur Aktiv-Reinigung von Scheiben bei einem Kraftfahrzeug bekannt, das die Vorgehensweise nach Betätigung eines Waschschalters in der Parkposition des Wischers beschreibt.

Zum weiteren technischen Hintergrund wird ergänzend auf die EP-A-0 764 568 hingewiesen.

Aus der DE 196 03 830 A1 ist eine Vorrichtung zur Aktiv-Reinigung von Scheiben, insbesondere von Windschutzscheiben, für Kraftfahrzeuge bekannt, bei der beidseitig zur Längsrichtung der Wischblätter Düsen zum Aufbringen von Reinigungsfluid vorgesehen sind. Auch hierbei steht die Reinigungswirkung ohne Berücksichtigung einer Sichtbeeinträchtigung im Vordergrund.

Es ist daher Aufgabe der Erfindung, ein Verfahren eingangs genannter Art derart zu verbessern, daß trotz der Gewährleistung eines guten Reinigungsergebnisses eine Einschränkung der Sicht des Fahrers vermieden wird.

Diese Aufgabe wird durch die Merkmale des Patentanspruchs 1 gelöst. Vorteilhafte Weiterbildungen der Erfindung sind die Gegenstände der abhängigen Ansprüche.

Unter Aktiv-Reinigung wird insbesondere ein Wischen mit zusätzlicher Waschfunktion mittels Aufbringen eines Reinigungsfluids, wie z. B. reines oder mit Reinigungssubstanzen versetztes Wasser, verstanden. Meist wird die zusätzliche Waschfunktion mittels der manuellen Betätigung eines Aktiv-Reinigungsschalters, z. B. in Form eines sog. Waschpumpenschalters, willkürlich durch den Fahrer angewählt. Der Aktiv-Reinigungsschalter kann jedoch auch automatisch durch ein Steuergerät betätigt werden, das beispielsweise den Verschmutzungsgrad der Scheibe feststellt.

Die Mittel zum Aufbringen des Reinigungsfluids, z. B. Waschwasserdüsen, können bezogen auf die Längsrichtung des Wischblattes bzw. der Wischlippe entweder einseitig, also in Ruhelage betrachtet oben oder unten, oder beidseitig angebracht sein. Bei beidseitiger Anordnung dieser Mittel ist erfindungsgemäß jedoch deren einseitige Ansteuerung zu ermöglichen.

Die Betätigung des Aktiv-Reinigungsschalters kann entweder in der Ruhelage oder während einer bereits vorgenommenen Bewegung des Scheibenwischarms begonnen werden.

Erfindungswesentlich ist das Aufbringen des Reinigungsfluids bzw. einer vorgegeben ersten erheblichen Menge des Reinigungsfluids grundsätzlich nur dann, wenn der Scheibenwischarm dieses Reinigungsfluid fast zeitgleich mit dem Aufbringen auf der Scheibe vor sich herschiebt. Durch die Erfindung wird verhindert, daß das Reinigungsfluid sichtbehindernd für längere Zeit größere Flächen der Scheibe benetzt. Andererseits kann durch das schnelle Entfernen eine große Menge des Reinigungsfluids ohne Sichtbehinderung aufgebracht werden.

Die vorgegebene zweite Menge des Reinigungsfluids, die kleiner als die erste Menge ist und die aufgetragen wird, wenn sich der Scheibenwischarm in die Gegenrichtung im Hinblick auf die Anordnung der Mittel zum Auftragen des Reinigungsfluids bewegt, kann auch Null sein. Wenn die vorgegebene zweite Menge des Reinigungsfluids nicht Null ist, wird sie vorzugsweise höchstens so groß gewählt, daß noch ausreichende Sicht gewährleistet ist, der Fahrer jedoch eine Benetzung der Scheiben erkennen kann. Hierbei werden Irritationen verhindert, die möglicherweise bei einigen Fahrern dadurch auftreten können, daß trotz Betätigung des Aktiv-Reinigungsschalters für eine Wischzyklushälfte kein Reinigungsfluid aufgebracht wird.

Die Unterteilung des Wischwinkel-Bereichs in einen Nicht-Waschbereich und in einen Waschbereich hat den Vorteil, daß im Nicht-Waschbereich Energie und Reinigungsfluid gespart werden kann. Der Nicht-Waschbereich ist durch einen lediglich noch kurzen verbleibenden Winkelweg des Scheibenwischarmes am Ende einer Wischzyklushälfte definiert, so daß ein Aufbringen des Reinigungsfluids in diesem Bereich nicht effizient wäre.

Der Waschbereich wiederum ist in einen Hauptwaschbereich und in einen Teilbenetzungsbereich unterteilt. Bei einem Beginn der Betätigung des Aktiv-Reinigungsschalters im Teilbenetzungbereich geht man von einem für ein gutes Reinigungsergebnis zu kurzen verbleibenden Winkelweg des Scheibenwischarms aus. Daher wird ein Nachwaschprogramm durchgeführt.

Das Nachwaschprogramm wird auch ausgeführt, wenn durch die Länge der Betätigung des Aktiv-Reinigungsschalters auf den Wunsch des Fahrers nach einer längeren Waschfunktion geschlossen werden kann.

Die erste und zweite Menge des Reinigungsfluids kann durch Taktung der Waschpumpe eingestellt werden.

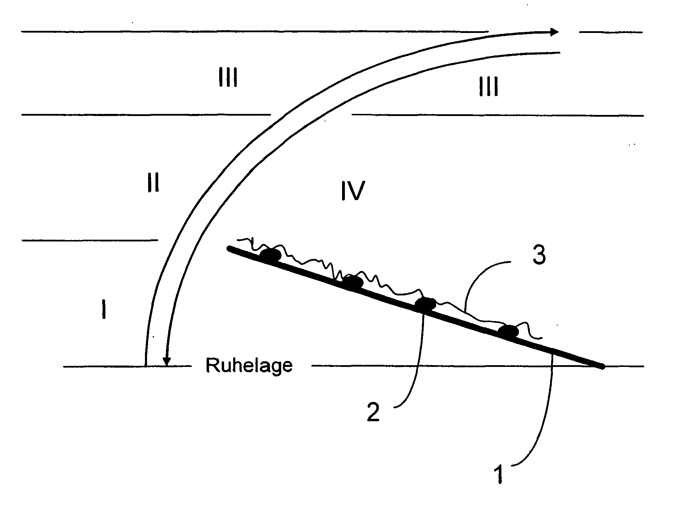

In der Zeichnung ist ein Ausführungsbeispiel der Erfindung dargestellt. Sie zeigt schematisch einen Scheibenwischarm mit Mitteln zum Aufbringen des Reinigungsfluids sowie die verschiedenen beim erfindungsgemäßen Verfahren berücksichtigten Winkelbereiche.

In der Zeichnung ist ein Scheibenwischarm 1 mit Mitteln 2 in Form von Düsen zum Aufbringen von Reinigungsfluid 3 dargestellt. Die Düsen 2 sind auf der -in Ruhelage betrachtet- oberen Seite des Wischblattes angeordnet. Diese Seite wird im folgenden kurz als definierte Seite bezeichnet.

Erfindungsgemäß wird daher eine vorgegebene erste, vorzugsweise mittels der Waschpumpe maximal mögliche Menge des Reinigungsfluids 3 nach dem Beginn der Betätigung eines hier nicht dargestellten Aktiv-Reinigungsschalters grundsätzlich nur dann aufgebracht, wenn sich der Scheibenwischarm 1 in Richtung dieser definierten Seite, hier also aufwärts, bewegt. Dabei schiebt der Scheibenwischarm 1 bzw. dessen Wischblatt bei der Aufwärtsbewegung kurz nach Aufbringen des Reinigungsfluids 3 durch die Düsen 2 das Reinigungsfluid 3 in Form einer Wasserwelle vor sich her.

Beim dargestellten Ausführungsbereich ist die vorgegebene zweite Menge des Reinigungsfluids 3 gleich Null. D.h. bei der Abwärtsbewegung des Scheibenwischarms 1 wird kein Reinigungsfluid 3 auf die Scheibe aufgebracht, um die Sicht nicht zu behindern.

Das Reinigungsfluid 3, hier also nur bei der Aufwärtsbewegung, wird abhängig vom Wischwinkel aufgebracht. Dabei wird der gesamte Wischwinkel-Bereich in einen Nicht-Waschbereich III und in einen Waschbereich IV unterteilt. Das Reinigungsfluid 3 bzw. die vorgegebene erste Menge des Reinigungsfluids 3 wird bei der Aufwärtsbewegung nur im Waschbereich IV aufgebracht. Der Nicht-Waschbereich III ist derart definiert, daß ein Aufbringen des Reinigungsfluids 3 nicht nötig ist, da dieser Bereich zum einen außerhalb des Blickzentrums des Fahrers liegt und zum anderen mit dem zuvor noch aufgetragenen Reinigungsfluid gereinigt werden kann. Hierdurch kann elektrische Energie ebenso wie Reinigungsfluid gespart werden.

Der gesamte Waschbereich IV wiederum ist in einen Hauptwaschbereich I und in einen Teilbenetzungsbereich II unterteilt. Bei einem Beginn der Betätigung des Aktiv-Reinigungsschalters im Teilbenetzungbereich II innerhalb der Wischzyklushälfte, in der grundsätzlich die vorgegebene erste Menge des Reinigungsfluids 3 aufgebracht wird, hier also bei der Aufwärtsbewegung, folgt ein Nachwaschprogramm, da in diesem Fall nur für den Rest des Teilbenetzungsbereiches II innerhalb des Waschbereichs IV Reinigungsfluid 3 auf die Scheiben aufgebracht wird. Hierbei wird davon ausgegangen, daß der ggf. nur kurze verbleibenden Winkelweg des Scheibenwischarms 1 im Teilbenetzungsbereich II für ein zufriedenstellendes Ergebnis nicht ausreichen könnte. Im Nachwaschprogramm wird an den momentan vorliegenden Wischzyklus mindestens ein vollständiger weiterer Wischzyklus mit Aufbringen von Reinigungsfluid 3 im Waschbereich IV während der Aufwärtsbewegung angeschlossen.

Erst recht wird ein Nachwaschprogramm durchgeführt, wenn die Betätigung des Aktiv-Reinigungsschalters erst im Nicht-Waschbereich III bei der Aufwärtsbewegung oder erst bei der Abwärtsbewegung begonnen wird. Die Menge des Reinigungsfluids 3 im Nachwaschprogramm kann gleich der vorgegebenen ersten Menge sein oder auch weniger als diese. Andererseits folgt bei einem Beginn der Betätigung des Aktiv-Reinigungsschalters in der Ruhelage oder im darauffolgenden Hauptwaschbereich I bei der Aufwärtsbewegung kein Nachwaschprogramm.

Grundsätzlich kann bei jeder Betätigung des Aktiv-Reinigungsschalters für länger als für einen vorgegebenen Zeitraum von beispielsweise 300 ms nach dem Loslassen des Aktiv-Reinigungsschalters mindestens ein vollständiger weiterer Wischzyklus mit Aufbringen von Reinigungsfluid 3 in Form eines Nachwaschprogrammes folgen.

Bei schwankender Bordnetzspannung kann die vorgegebene erste und zweite Menge des Reinigungsfluids 3 durch entsprechend getaktete Ansteuerung der Waschpumpe weitgehend konstant eingestellt werden.

Die Bereiche I, II und III umfassen vorzugsweise jeweils ca. 30°.

Die Düsen 2 könnten auch unterhalb des Wischblattes angebracht oder, bei beidseitig angebrachten Düsen, unterhalb des Wischblattes angesteuert werden. Für diesen Fall würde das Reinigungsfluid 3 zumindest vorwiegend bei der Abwärtsbewegung aufgebracht werden. Die Bereiche I, II und III bzw. die Bereiche III und IV würden für diesen Fall zur Horizontalen gespiegelt sein. Die Funktionen im Hinblick auf das Nachwaschprogramm unterscheiden sich insbesondere darin, daß kein Nachwaschprogramm notwendig ist, wenn die Betätigung des Aktiv-Reinigungsschalters während der Aufwärtsbewegung beginnt.

## Patentansprüche

1. Verfahren zur Aktiv-Reinigung von Scheiben bei einem Kraftfahrzeug mit einem Scheibenwischarm (1), der ein Wischblatt und Mittel (2) zum Aufbringen von Reinigiungsfluid (3) auf die Scheibe umfaßt, wobei die Mittel (2) zum Aufbringen des Reinigungsfluids (3) derart angeordnet und/oder ansteuerbar sind, daß bezogen auf die Längsrichtung des Wischblattes das Reinigungsfluid (3) auf einer definierten Seite des Wischblattes aufgebracht wird, mit folgenden Schritten:
➢ Warten auf die Betätigung eines Aktiv-Reinigungsschalters,
➢ Aufbringen einer vorgegebenen ersten Menge des Reinigungsfluids (3) nach dem Beginn der Betätigung des Aktiv-Reinigungsschalters grundsätzlich nur dann, wenn sich der Scheibenwischarm (1) in Richtung der definierten Seite bewegt.
➢ der gesamte Wischwinkel-Bereich wird in mindestens zwei Winkelbereiche, erstens in einen Nicht-Waschbereich (III) und zweitens in einen Waschbereich (I, II; IV), unterteilt,
➢ die vorgegebene erste Menge des Reinigungsfluids (3) wird nur im Waschbereich (I, II; IV) aufgebracht,
**gekennzeichnet durch** folgende weiteren Schritte:
➢ der gesamte Waschbereich (IV) wird in mindestens zwei Unterbereiche, erstens in einen Hauptwaschbereich (I) und zweitens in einen Teilbenetzungsbereich (II), unterteil, wobei der Teilbenetzungbereich (II) einen Wischwinkel zwischen ca. 30° und ca. 60°, gemessen aus der Parkposition des Wischers, umschließt, und
➢ bei einem Beginn der Betätigung des Aktiv-Reinigungsschalters im Teilbenetzungbereich (II) innerhalb der Wischzyklushälfte, in der grundsätzlich die vorgegebene erste Menge des Reinigungsfluids (3) aufgebracht wird, folgt mindestens ein vollständiger weiterer Wischzyklus mit Aufbringen von Reinigungsfluid (3) im Waschbereich (I, II; IV) in Form eines Nachwaschprogrammes.

2. Verfahren nach Patentanspruch 1, **dadurch gekennzeichnet, daß** bei einer Betätigung des Aktiv-Reinigungsschalters für einen längeren Zeitraum als für einen vorgegebenen Zeitraum (300 ms) nach dem Loslassen des Aktiv-Reinigungsschalters mindestens ein vollständiger weiterer Wischzyklus mit Aufbringen des Reinigungsfluids (3) in Form eines Nachwaschprogrammes folgt.

3. Verfahren nach einem der vorangegangenen Patentansprüche, **dadurch gekennzeichnet, daß** die vorgegebenen Mengen des Reinigungsfluids (3) durch entsprechend getaktete Ansteuerung einer Waschpumpe eingestellt werden.

4. Verfahren nach einem der vorangegangenen Patentansprüche, **dadurch gekennzeichnet, daß** die vorgegebenen Mengen des Reinigungsfluids (3) abhängig von der Bornetzspannung eingestellt werden.

## Claims

1. A method of active cleaning of windows of a motor vehicle, using a windscreen wiper arm (1) comprising a wiper blade and means (2) for depositing cleaning liquid (3) on the window, wherein the means (2) for depositing the cleaning liquid (3) are disposed and/or actuated so that relative to the longitudinal direction of the wiper blade, the cleaning liquid (3) is applied to a defined side of the wiper blade, in the following steps:
waiting until actuation of an active cleaning switch,
applying a set first amount of cleaning liquid (3) after the beginning of actuation of the active cleaning switch, but not until the wiper arm (1) is moving in the direction of the specified side,
the entire washing-angle region is divided into at least two angle regions, a non-washing region (III) and a washing region (I, II; IV), and
the set first amount of cleaning liquid (3) is applied only in the washing region (I, II; IV),
**characterised by** the following additional steps,
the entire washing region (IV) is divided into at least two subregions, a main washing region (I) and a partly-wetted region (II), wherein
the partly-wetted region (II) encloses a wiping angle between about 30° and about 60°, measured from the parking position of the wiper, and
the beginning of actuation of the active cleaning switch in the partly-wetted region (II) during the wiping half-circle in which the said first amount of cleaning liquid (3) must be applied, is followed by at least one complete additional wiping cycle in which cleaning liquid (3) is applied in the washing region (I, II; IV) during a re-washing program.

2. A method according to claim 1, **characterised in that** when the active cleaning switch is actuated for a period longer than a set period (300 ms), release of the active cleaning switch is followed by at least one complete additional wiping cycle in which cleaning liquid (3) is applied in a re-washing program.

3. A method according to any of the preceding claims, **characterised in that** the required amounts of cleaning liquid (3) are set by suitably timed actuation of a washing pump.

4. A method according to any of the preceding claims, **characterised in that** the required amounts of cleaning liquid (3) are set in dependence on the voltage of the vehicle electrical system.

## Revendications

1. Procédé de nettoyage actif de vitres pour un véhicule automobile, avec un bras d'essuie-glace (1) qui comprend un balai d'essuie-glace et des moyens (2) pour appliquer un fluide de nettoyage (3) sur la vitre, disposés et/ou commandés pour appliquer le fluide de nettoyage (3) d'un côté défini du balai d'essuie-glace, par rapport à la direction longitudinale du balai d'essuie-glace, comportant les étapes suivantes :
➢ attendre l'actionnement d'un interrupteur de nettoyage actif ;
➢ appliquer une première quantité prédéterminée du fluide de nettoyage (3) après le commencement de l'actionnement de l'interrupteur de nettoyage actif, en principe seulement lorsque le bras d'essuie-glace (1) se déplace en direction du côté défini ;
➢ subdiviser toute la zone angulaire d'essuyage en au moins deux zones angulaires, premièrement une zone sans lavage (III) et deuxièmement une zone de lavage (I, II ; IV) ; et
➢ appliquer la première quantité prédéterminée du fluide de nettoyage (3) seulement dans la zone de lavage (I, II ; IV) ;
**caractérisé par**
les autres étapes suivantes :
➢ subdiviser toute la zone de lavage (IV) en au moins deux zones partielles, premièrement une zone de lavage principale (I) et deuxièmement une zone de mouillage partiel (II),
la zone de mouillage partiel (II) couvrant un angle d'essuyage compris entre environ 30° et environ 60°, mesuré à partir de la position de parcage de l'essuie-glace, et
➢ si un actionnement de l'interrupteur de nettoyage actif a commencé à l'intérieur de la moitié du cycle d'essuyage, dans la zone de mouillage partiel (II) dans laquelle on applique en principe la première quantité prédéterminée de fluide de nettoyage (3), effectuer ensuite au moins un autre cycle d'essuyage complet avec application de fluide de nettoyage (3) dans la zone de lavage (I, II ; IV) sous forme de programme de post-lavage.

2. Procédé selon la revendication 1,
**caractérisé en ce que**
si l'on actionne l'interrupteur de nettoyage actif pendant une durée plus longue qu'une durée prédéterminée (300 ms) après la libération de l'interrupteur de nettoyage actif, on effectue au moins un autre cycle d'essuyage complet avec application du fluide de nettoyage (3) sous forme de programme de post-lavage.

3. Procédé selon l'une quelconque des revendications précédentes,
**caractérisé en ce que**
les quantités prédéterminées de fluide de nettoyage (3) sont réglées par une commande cadencée de façon correspondante d'une pompe de lavage.

4. Procédé selon l'une quelconque des revendications précédentes,
**caractérisé en ce que**
les quantités prédéterminées de fluide de nettoyage (3) sont réglées en fonction de la tension du réseau de bord.
